# EUROPEAN PATENT APPLICATION

(11) **EP 3 192 959 A1**
(43) Date of publication of application: **19.07.2017**
(21) Application number: 16150904.7
(22) Date of filing: 12.01.2016
(51) Int. Cl.: E06B 3/02, E06B 3/673, E06B 3/66

(54) **METHOD TO PRODUCE INSULATING GLASS UNITS AND INSULATING GLASS UNITS**

(71) Applicant: AGC Glass Europe, 1348 Louvain-la-Neuve (BE)
(72) Inventor: CHORINE, Nicolas, 1490 Court-Saint-Etienne (BE); BOUESNARD, Olivier, 1460 Ittre (BE); CUMPELIK, Pavel, 41742 Krupka (CZ)
(74) Representative: Chabou, Samia

(57) **Abstract**

The present invention relate to a method to produce an insulating glass unit (IGU) comprising the following steps:
-Forming a first assembly by fastening to a first glass plate (3) an IGU spacer (1) and, apart from said IGU spacer (1), an edge element (2) comprising at least one through hole (10), said edge element (2) being fastened with the help of one of an immediate tack and green strength adhesive (5) or a compressible adhesive seal (8);
-Fastening by pressing a second glass plate (6) to said first assembly, said second glass plate (6) being fastened to the IGU spacer (1) and to the edge element (2), said edge element (2) being fastened thanks to the other one of an immediate tack and green strength adhesive (5) or a compressible adhesive seal (8);
-Injecting a structural sealant (9) into said at least one through hole (10) of said edge element (2) to fill up the space between the IGU spacer (1) and the edge element (2).

## Description

The invention relates a method to produce insulating glass units (IGUs) for windows and doors comprising at least two glass panels, particularly frameless windows and doors.

The invention also relates to the insulating glass units (IGU) obtained by said process.

The invention also relates to the windows and doors comprising the insulating glass units (IGU) according to the invention.

Frameless windows and doors are known to improve window to wall ratio (WWR) by increasing the size of transparent surface compared to classical windows and doors. The word "frameless" herein means that the casement of the door or window has a larger transparent surface compared to a standard door or window by elimination of some or all frame parts. In a frameless window, window hardware is usually integrated into the glazing or so-called insulating glass unit (IGU) to hold it. An insulating glass unit comprises at least two glass plates separated by a vacuum or gas filled space to reduce heat transfer across the window. Window hardware or fittings are these metallic parts (levers, sliding support...) which are, in traditional windows, positioned between the casement frame and fixed frame, and by means of which the casement can be opened or closed. The main challenge of such frameless window concept is to identify the right way to connect the IGU to the fixed frame to offer a frameless aspect or glassy look - either the window is closed or open
- while keeping reasonable insulation and tightness performances to address most of exterior applications.

Document BE1010537 discloses a process to manufacture an IGU wherein an edge element is installed between the glass plates of the said IGU. The edge element is used to receive fastening or fixing means to fix the IGU on a fixed frame. In the described process, the edge element is first fastened to a first glass plate thanks to a double side mounting tape. In a second step, a spacer frame is coated with polyisobutylene before being fastened on its first side to the first glass plate. The second glass plate is then pressed against the other side of the spacer such to define an insulated space between the two glass plates. Afterwards a sealant is injected through a gap between the edge element and the second glass plate. The edge element is indeed shaped and sized such that it does not constitute a bridge between the two glass plates, precisely so as to allow the injection of a viscous structural sealant between the spacer and the edge element. Such structural sealant will be able to sustain the mechanical constraints induced by the weight of the glass plates, the thermal dilatation or contraction, the wind or the like and needs consequently to have a high elastic limit. Typically the structural sealant is a silicone based adhesive. Such structural sealant is however expensive and represents a significant cost in the IGUs from the prior art due to the large volume occupied by said sealant.

Document EP2402540 discloses a method to manufacture IGUs for frameless windows wherein the edge element is placed between the glass plates and glued to each of the glass plates after the IGU has been sealed. The edge element is fastened to the glass plates thanks to a structural sealant with a high cost. Compared to the other prior art, the quantity of structural sealant required by this method is reduced because no injection of structural sealant between the spacer and the edge element is required. The fastening of the edge element thanks to a structural sealant however requires maintaining the IGU horizontally during the curing time of the sealant. The gluing of the edge element in a structural sealant also involves a reduced accuracy in its positioning on the glass panels because sealant behaves like a paste when it is not cured. Thus, glued piece could move if it not fixed or if IGU is placed vertically. Furthermore the empty space between the spacer and the edge element observed in this prior art can become a trap for water which will condensate and eventually attack the structural sealant or the IGU sealant during IGU lifetime.

It is an object of the invention to remedy to the drawbacks of the aforementioned prior art.

It is thus an object of the invention to provide a method to produce insulating glass units (IGUs) for doors or windows according to claim 1, which minimizes the quantity of structural sealant to be used while keeping a reduced duration for the process and an accurate positioning of the edge element on the glass plates.

For sake of clarity, by green strength of an adhesive, it is meant its resistance to deformation and fracture without curing, but after pressing it. By immediate tack it is meant the ability of an adhesive material to resist separation after bringing it into contact with a surface for a short time under a light pressure. By through hole, it is meant an opening throughout the edge element allowing a contact between the exterior atmosphere and the cavity between the IGU spacer and the edge element. The size and the number of through holes as well as the pitch between them are adjusted depending on the sealant viscosity and the sealant injection means. By compressible seal, it is meant that the seal can be deformed and can maintain this deformation with a very low force. By structural material, it is meant a material with the ability to sustain mechanical constraints induced by the weight of the glass plates, the thermal dilatation or contraction, the wind or the like. A material having structural properties needs consequently to have a high elastic limit.

It is understood that different types of glass are suitable as glass plates in the frame of the present invention. The glass plates used can for example be made of safety glass of two types: tempered glass or laminated glass, which are known to the skilled people. The glass plates can optionally be edge-ground. Other options, such as heat insulation with low-e coatings, solar control coatings, reinforced acoustic insulation with acoustic laminated glass are also compatible with the present concept to improve the performances of the window or door. Glass plates with electrochromic, thermochromic, photochromic or photovoltaic elements are also compatible with the present invention. The different glass plates of the IGU according to the present invention can be of the same or of a different type. At least one of the glass plates of the IGU can optionally be partly coated with a layer of enamel or organic ink. This layer can have an aesthetic function by concealing the IGU spacer and the edge element from the view of the people looking through the window or door comprising the IGU according to the invention. In other embodiments of the invention, glass plates are not coated with a layer of enamel or organic ink. In other embodiments, the different glass plates of the IGU can have different dimensions.

In an advantageous embodiment, the step of forming the first assembly comprises the sub steps of:
- Pressing the IGU spacer coated with a thermoplastic sealant on the first glass plate;
- Pressing said edge element on the first glass plate with a layer of immediate tack and green strength adhesive being placed between said first glass plate and a first face of said edge element, the opposite face of said edge element being coated with said compressible adhesive seal.

In the present invention, the edge element can have different uses, for example:
- to receive fastenings or fixing means to connect the IGU with another IGU, with a frame or with a building structure;
- to strengthen the IGU and reduce its deflection;
- to make a seal between the IGU and another IGU, a frame or a building structure;
- to protect the edge of the IGU;
- to put some cables or wires.

In this regard, the edge element 2 can be protruding from the IGU, for example to make a seal with surrounding parts.

In a further embodiment, the method according to the invention comprises subsequent steps wherein a third glass plate is fastened to the first or second glass plate in order to obtain a triple glazing IGU. The method according to the invention to fasten the first glass plate to the second glass plate can be used to fasten the third glass plate to the first glass plate or the second glass plate. In this particular embodiment, two edge elements are used, which can have different uses amongst those listed supra. Alternatively, the third glass plate can be fastened without using an edge element. Alternatively, a triple glazing IGU can also be obtained by the process according to the invention if one of the glass plates is replaced by a standard insulating glass unit. A standard insulating glass unit is known to the skilled person and is not produced according to the method of the invention.

The invention also relates to IGUs obtained by the method according to the invention.

The invention also relates to windows or doors comprising the IGUs according to the invention.

More particularly, the invention also relates to frameless windows or doors comprising the IGUs according to the invention. By frameless, it is meant that the casement of the door or window has a larger transparent surface compared to a standard door or window by elimination of some or all frame parts. In standard doors or windows, fastening or fixing means are positioned between the casement frame and fixed frame. In frameless windows or doors according to the present invention, fastening or fixing means are fastened to the edge element of the IGUs allowing to eliminate some or all the frame parts of the casement. Such fastening or fixing means are windows hardware.

The invention will be better understood upon reading the following description in view of the attached figures that will in no way limit the scope of the invention and wherein:
Fig.1 represents the successive steps of a method to manufacture IGUs according to the invention;
Fig.2 shows a side view an IGU obtained with a first embodiment of the method according to the invention;
Fig.3 shows a side view an IGU obtained with a second embodiment of the method according to the invention;

The figures are not drawn to scale. Generally, identical components are denoted by the same reference numerals in the figures.

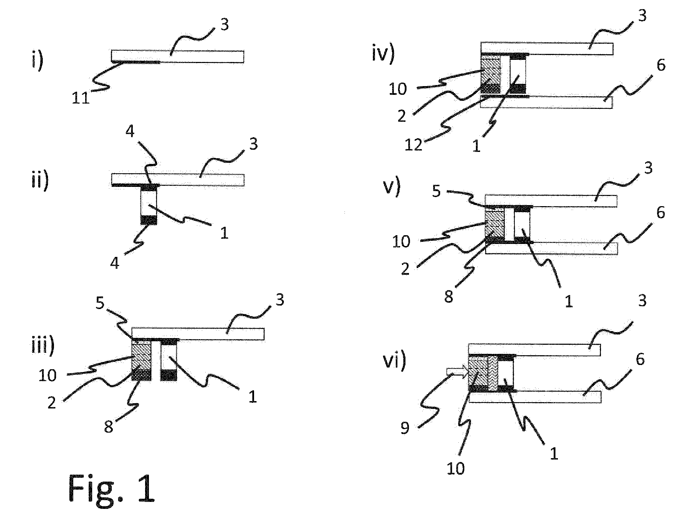

Fig. 1 represents the successive steps of a method to manufacture IGUs according to the invention.

At step i), a first glass plate 3 comprising an enamelled area 11 over its entire periphery is disposed.

At step ii), an IGU spacer 1 coated with a thermoplastic sealant 4 is pressed on the first glass plate 3. In the present invention, the thermoplastic sealant 4 comprises for example polyisobutylene. Although in Fig. 1 the same sealant 4 is used for both sides of the IGU spacer 1, in other embodiments, a different sealant can be used for each side of the IGU spacer 1. The IGU spacer 1 will delimit a cavity between the first glass plate 3 and a second glass plate as detailed in the subsequent steps. The IGU spacer 1 has consequently a surrounding shape in order to space apart the glass plates on their edge. The IGU spacer 1 can be made of one piece or can alternatively comprise a plurality of elements having their extremities abutted to form the surrounding shape. The IGU spacer 1 can be metallic, polymeric, in composite materials reinforced by glass fibres or a mix of several of these materials. The IGU spacer can be hollow in order to be able to receive for example some drying material. Such IGU spacer 1 is then perforated to allow the drying material to trap water vapor that is coming in the cavity of the IGU.

At step iii), an edge element 2 comprising through holes 10 is pressed on the first glass plate 3 with a layer of immediate tack and green strength adhesive 5, for example a double side mounting tape, being placed between said first glass plate 3 and a first face of said edge element 2, the opposite face of said edge element 2 being coated with a compressible adhesive seal 8.

In the present invention, the edge element 2 can either be a continuous peripheral element with a structure surrounding the IGU spacer 1 or can comprise a plurality of disconnected elements placed in the periphery of the IGU spacer 1. When the edge element 2 comprises a plurality of disconnected elements, the through holes 10 in said edge element 2 can be either through holes in the disconnected elements or gaps between said disconnected elements or both of them. The use of disconnected elements is advantageous as it allows saving edge element material by placing disconnected elements only where needed to realize their functions. It is also advantageous as it allows bringing different functions in different disconnected elements. Furthermore, the edge element 2 can be hollow or filled. The edge element can have different shapes. It can for instance be U-shaped what is interesting in the case of a frameless window or door as it can receive the fastening or fixing means. Any shape that can fulfil this function is also suitable for frameless window or door. Advantageously, it comprises two opposite surfaces to bond the edge element 2 to the two glass planes 3 and 6. The edge element 2 can be metallic, polymeric, in composite materials reinforced by glass fibres or a mix of several of these materials.

As already explained above, the edge element 2 of the invention can have different uses, for example:
- to receive fastenings or fixing means to connect the IGU with another IGU, with a fixed frame or with a building structure;
- to strengthen the IGU and reduce its deflection;
- to make a seal between the IGU and another IGU, a frame or a building structure;
- to protect the edge of the IGU;
- to put some cables or wires.

In this regard, the edge element 2 can be protruding from the IGU, for example to make a seal with surrounding parts.

In the present invention, the immediate tack and green strength adhesive 5 can be a double side mounting tape with structural properties comprising a polyurethane or an acrylic foam carrier or an acrylate based adhesive. When structural anchoring of edge element 2 is assured by structural sealant 9, the immediate tack and green strength adhesive 5 can also comprise a soft double-side foam tape or a thermoplastic sealant, without structural properties.

As illustrated in Fig. 1, the layer of immediate tack and green strength adhesive 5 will allow a very accurate positioning of the edge element 2 while also making possible to move the first glass plate in a vertical position right after the positioning of the edge element 2 and to store vertically the IGU just after the structural sealant 9 application. This feature is advantageous in terms of production efficiency.

At step iv), a second glass plate 6 also comprising an enamelled area 12 is placed parallel to first glass plate of the assembly obtained at step ii). In an advantageous embodiment, the IGU is filled with a thermal insulating gas before both glass plates are pressed, during this step.

At step v), both glass plates 3, 6 are pressed in order to reach the requisite distance between said glass plates 3 and 6 before releasing the pressure. In this way, the second glass plate 6 is fastened to the IGU spacer frame 1 with the help of the thermoplastic sealant 4 and to the edge element 2 thanks to the compressible adhesive seal 8. The thermoplastic sealant 4 on both sides of the IGU spacer constitutes an IGU double seal preventing water vapor to get in the IGU cavity and potentially to keep an insulating gas inside the IGU cavity.

The compressible adhesive seal 8 according to the invention can be a double side soft foam tape, for example a polyethylene foam carrier and an acrylate based adhesive, or alternatively a thermoplastic sealant. The compressible adhesive seal 8, on one hand, holds the edge element 2 in position, and on the other hand, delimits a specific space between the IGU spacer 1 and the edge element 2. Another characteristic of this compressible adhesive seal 8 is its capacity to deform itself and to maintain this deformation with a very low force. During the pressing step, the compressible adhesive seal 8 deforms itself and, during the release step, it maintains its deformation in order not to stretch or even destroy the seals comprising thermoplastic sealant 4 between the spacer 1 and glass plates 3 and 6.

The enamelled areas 11 and 12 will have an aesthetic function by concealing the IGU spacer 1 and the edge element 2 from the view of the people looking through the frameless window or door comprising the IGU according to the invention.

At step vi), a structural sealant 9 is injected into said through holes 10 of said edge element 2 until the space between the IGU spacer 1 and the edge element 2 is filled.

In the present invention, the structural sealant 9 can comprise a two components sealant comprising a base and a hardener. In an advantageous embodiment, said two components sealant comprises silicone, polyurethane or polysulfide sealants, preferably the two components sealant is a silicone sealant.

In the present invention, the presence of through holes 10 in the edge element 2 allows indeed an injection of structural sealant 9, which is generally a very viscous substance, into said through holes 10. The presence of the through holes renders unnecessary the gap between the edge element 2 and the second glass plate 6 required in the prior art discussed above. The method according to the invention will consequently provide flexibility in the choice of the width and shape for the edge element 2.

In the present invention, the total width of the edge element 2, the green strength and immediate tack adhesive 5 and the compressible adhesive seal 8 is equal to the distance between said first glass plate 3 and second glass plate 6 after pressing. This distance is determined by the width of the IGU spacer 1 and its thermoplastic sealant 4. It advantageously minimizes the waste of expensive structural sealant 9 as geometry of the cavity to be filled with structural sealant is optimized and no structural sealant 9 can flow out of the cavity delimited by the edge element 2, the IGU spacer 1 and the 2 glass plates 3 and 6.

In an advantageous embodiment, after the curing of the structural sealant 9 injected in said through holes 10 of said edge element 2, a mask is applied to cover said through holes 10.

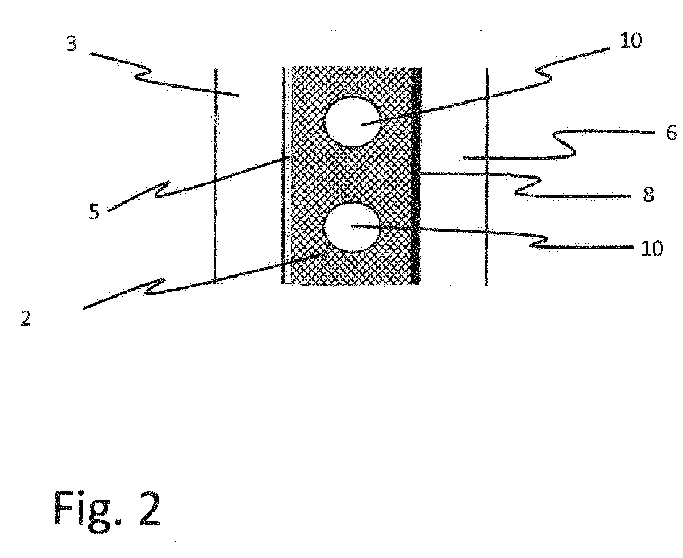

Fig. 2 shows a side view of an IGU obtained with a first embodiment of the method according to the invention. In this embodiment, the edge element 2 is made of a continuous peripheral element and through holes 10 to inject the structural sealant 9 are punched into said edge element 2. It is fastened to the glass plates 3 and 6 by the immediate tack and green strength adhesive 5 and the compressible adhesive seal 8.

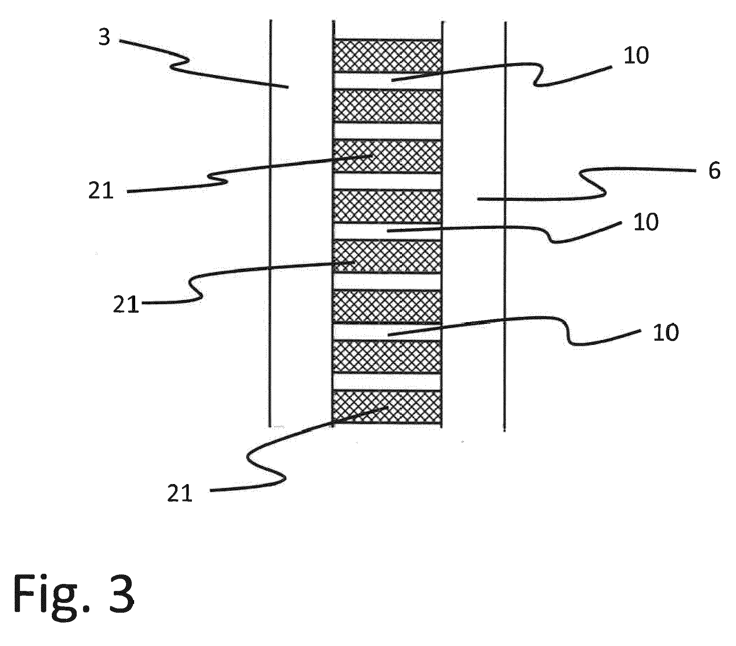

Fig. 3 shows a side view of an IGU obtained with a second embodiment of the method according to the invention. In this embodiment, the edge element comprises a plurality of disconnected elements 21. The through holes in the edge element to inject the structural sealant 9 are in this case spaces 10 between the successive disconnected elements 21. The immediate tack and green strength adhesive 5 and the compressible adhesive seal 8 are not illustrated in Fig.3.

## Claims

1. Method to produce an insulating glass unit (IGU) comprising the following steps:
- Forming a first assembly by fastening to a first glass plate (3) an IGU spacer (1) and, apart from said IGU spacer (1), an edge element (2) comprising at least one through hole (10), said edge element (2) being fastened with the help of one of an immediate tack and green strength adhesive (5) or a compressible adhesive seal (8);
- Fastening by pressing a second glass plate (6) to said first assembly, said second glass plate (6) being fastened to the IGU spacer (1) and to the edge element (2), said edge element (2) being fastened thanks to the other one of an immediate tack and green strength adhesive (5) or a compressible adhesive seal (8);
- Injecting a structural sealant (9) into said at least one through hole (10) of said edge element (2) to fill up the space between the IGU spacer (1) and the edge element (2).

2. Method according to claim 1 wherein the IGU spacer (1) is fastened to the first glass plate (3) and/or to the second glass plate (6) thanks to a thermoplastic sealant (4).

3. Method according to anyone of the preceding claims **characterized in that** the step of forming the first assembly comprises the steps of:
- Pressing the IGU spacer (1) coated with a thermoplastic sealant (4) on the first glass plate (3);
- Pressing said edge element (2) on the first glass plate (3) with a layer of immediate tack and green strength adhesive (5) being placed between said first glass plate (3) and a first face of said edge element (2), the opposite face of said edge element (2) being coated with said compressible adhesive seal (8).

4. Method according to anyone of the preceding claims wherein the edge element (2) is a continuous peripheral element with a surrounding structure surrounding the IGU spacer (1).

5. Method according to anyone of claims 1 to 3 wherein the edge element (2) comprises a plurality of disconnected elements (21) in the periphery of the IGU spacer (1).

6. Method according to anyone of the preceding claims wherein said immediate tack and green strength adhesive (5) between said edge element (2) and said first glass plate (3) comprises a double side mounting tape with structural properties.

7. Method according to anyone of claims 1 to 5 wherein said immediate tack and green strength adhesive (5) comprises an adhesive without structural properties.

8. Method according to anyone of the preceding claims **characterized in that** said compressible adhesive seal (8) between said edge element (2) and said second glass plate (6) comprises a double side soft foam tape or a thermoplastic sealant.

9. Method according to anyone of the preceding claims wherein a third glass plate is fastened to the first or second glass plate (3, 6) in order to obtain a triple glazing IGU.

10. Method according to anyone of the preceding claims wherein one of the glass plates (3,6) is replaced by a standard insulating glass unit.

11. Method according to anyone of the preceding claims wherein the glass plates have different dimensions.

12. IGU **characterized in that** it is obtained by anyone of the preceding claims.

13. Window **characterized in that** it comprises an IGU according to claim 12.

14. Door **characterized in that** it comprises an IGU according to claim 12.
